# EUROPÄISCHE PATENTANMELDUNG

(11) **EP 4 556 998 A1**
(43) Veröffentlichungstag der Anmeldung: **21.05.2025**
(21) Anmeldenummer: 23210893.6
(22) Anmeldetag: 20.11.2023
(51) Int. Cl.: G03B 21/14, F21S 41/00, G03B 21/00, G02B 7/02

(54) **VORRICHTUNG UND BAUGRUPPE ZUM ERZEUGEN EINES BILDES AUF EINER PROJEKTIONSFLÄCHE**

(71) Anmelder: Uno Minda Europe GmbH, 80809 München (DE)
(72) Erfinder: Merz, Bernd, 72664 Kohlberg (DE); Pfeifer, Florian, 72810 Gomaringen (DE)
(74) Vertreter: Schaumburg und Partner Patentanwälte mbB

(57) **Zusammenfassung**

Eine Vorrichtung (100) zum Erzeugen eines Bildes auf einer Projektionsfläche hat mindestens eine Lichtquelle (104), die dazu ausgebildet ist, Beleuchtungslicht zu erzeugen, ein Bilderzeugungselement (108), das zum Erzeugen der Bilder von dem Beleuchtungslicht durchleuchtbar ist, eine Abbildungsoptik (110), die dazu ausgebildet ist, das Bilderzeugungselement (108) zum Erzeugen der Bilder auf die Projektionsfläche abzubilden, und ein Gehäuse (102a, 102b), das dazu ausgebildet ist, zumindest das Bilderzeugungselement (108) und die Abbildungsoptik (110) aufzunehmen. Das Gehäuse (102a, 102b) weist ein erstes Anschlagelement (202) und ein erstes elastisches Positionierungselement (200) auf, das dazu ausgebildet ist, eine Federkraft auf das Bilderzeugungselement (108) auszuüben, um das Bilderzeugungselement (108) in eine vordefinierte Richtung (P1) gegen das erste Anschlagelement (202) zu pressen. Alternativ oder zusätzlich weist das Gehäuse (102a, 102b) ein zweites Anschlagelement (602) und ein zweites elastisches Positionierungselement (600) auf, das dazu ausgebildet ist, eine Federkraft auf die Abbildungsoptik (110) auszuüben, um die Abbildungsoptik (110) in die vordefinierte Richtung (P3) gegen das zweite Anschlagelement zu pressen.

## Beschreibung

Die Erfindung betrifft eine Vorrichtung zum Erzeugen eines Bildes auf einer Projektionsfläche mit mindestens einer Lichtquelle, die dazu ausgebildet ist, Beleuchtungslicht zu erzeugen, einem Bilderzeugungselement, das zum Erzeugen der Bilder von dem Beleuchtungslicht durchleuchtbar ist, einer Abbildungsoptik, die dazu ausgebildet ist, das Bilderzeugungselement zum Erzeugen der Bilder auf die Projektionsfläche abzubilden, und einem Gehäuse, das dazu ausgebildet ist, zumindest das Bilderzeugungselement und die Abbildungsoptik aufzunehmen.

Im Automobilbereich werden sogenannte Logoleuchten verwendet, die einzelne Bilder oder eine Abfolge von Einzelbildern zum Erzeugen einer kurzen Animation, beispielsweise vor eine Tür eines Fahrzeugs, projizieren können. Die Funktionsweise einer solchen Logoleuchte entspricht der eines Dia- bzw. Filmprojektors, d.h. es wird ein Bilderzeugungselement zum Erzeugen der Bilder durchleuchtet und auf eine Projektionsfläche abgebildet. Das Bilderzeugungselement ist beispielsweise ein auf eine Glasplatte aufgebrachtes Diapositiv oder ein Flüssigkristallelement.

Die Elemente einer Logoleuchte sind üblicherweise in einem Gehäuse angeordnet, welches die Elemente hält und zueinander positioniert. Die Elemente müssen in dem Gehäuse spielfrei und möglichst exakt positioniert werden, so dass die Elemente nicht verrutschen oder aus dem Gehäuse herausfallen können. Im Stand der Technik werden zum Halten und Positionieren der Elemente Quetschrippen verwendet. Die Quetschrippen üben von mehreren sich jeweils gegenüberliegenden Seiten jeweils eine Kraft auf das zu positionierende Element aus, um das Element innerhalb des Gehäuses zu zentrieren. Insbesondere das Bilderzeugungselement wird im Stand der Technik in das Gehäuse gepresst, um mittels der Quetschrippen genau positioniert werden zu können. Durch Fertigungstoleranzen kann entweder Spiel oder eine zu stramme Presspassung zwischen dem Gehäuse und dem Element auftreten. Eine zu stramme Presspassung des Bilderzeugungselementes führt dazu, dass die Quetschrippen Biege- oder Torsionskräfte auf das Bilderzeugungselement ausüben. Durch diese Biege- oder Torsionskräfte können Spannungen in dem Bilderzeugungselement entstehen, wodurch insbesondere aus Glas gefertigte Bilderzeugungselemente zerbrechen können. Insbesondere bei hohen Stückzahlen in der Fertigung ist ein Abstimmen der Bauteile der Logoleuchte über viele Chargen und Formnester nur mit hohem Aufwand möglich, so dass Fertigungstoleranzen unvermeidlich sind.

Es ist daher Aufgabe der Erfindung, eine Vorrichtung und eine Baugruppe zum Erzeugen eines Bildes auf einer Projektionsfläche anzugeben, bei denen der Einfluss von Fertigungstoleranzen auf die Montage reduziert ist.

Die Vorgeschlagene Vorrichtung zum Erzeugen von Bildern auf einer Projektionsfläche löst diese Aufgabe dadurch, dass das Gehäuse ein erstes Anschlagelement und ein erstes elastisches Positionierungselement aufweist, das dazu ausgebildet ist, eine Federkraft auf das Bilderzeugungselement auszuüben, um das Bilderzeugungselement in eine vordefinierte Richtung gegen das erste Anschlagelement zu pressen. Alternativ oder zusätzlich weist das Gehäuse ein zweites Anschlagelement und ein zweites elastisches Positionierungselement auf, das dazu ausgebildet ist, eine Federkraft auf die Abbildungsoptik auszuüben, um die Abbildungsoptik in die vordefinierte Richtung gegen das zweite Anschlagelement zu pressen.

Anders als im Stand der Technik bekannt, werden die zu positionierenden Elemente, d.h. das Bilderzeugungselement bzw. die Abbildungsoptik, nicht durch elastische Elemente, beispielsweise Quetschrippen, von allen Seiten her in Richtung eines Zentrums gepresst. Die elastischen Positionierungselemente der vorgeschlagenen Vorrichtung üben einseitig eine Kraft in die vordefinierte Richtung auf das jeweilige zu positionierende Element aus. Hierdurch wird das zu positionierende Element gegen das jeweilige Anschlagelement gepresst und so innerhalb des Gehäuses positioniert und gehalten. Dies sorgt für einen Toleranzausgleich, da alle zu positionierenden Elemente in die gleiche Richtung positioniert werden. Da die elastischen Positionierungselemente und die zu positionierenden Elemente dabei nur an wenigen Stellen in Kontakt stehen, haben Fertigungstoleranzen bei den vorgenannten Elementen einen weitaus geringeren Einfluss auf die endgültige Position des zu positionierenden Elementes. So reduziert die vorgeschlagene Vorrichtung den Einfluss von Fertigungstoleranzen auf die Montage.

Bei einer Ausführungsform umfasst das Gehäuse mindestens einen in die vordefinierte Richtung vorgespannten Bügel als das erste elastische Positionierungselement. Vorzugsweise weist das Gehäuse zwei oder mehr Bügel auf, die im montierten Zustand jeweils auf der gleichen Seite des Bilderzeugungselementes angeordnet sind, d.h. wenn das Bilderzeugungselement in das Gehäuse eingesetzt ist. Vorzugsweise ist der Bügel entgegen der vordefinierten Richtung biegbar, so dass das Bilderzeugungselement in das Gehäuse einsetzbar ist, ohne dass dabei eine Kraft durch den Bügel auf das Bilderzeugungselement ausgeübt wird. Der Bügel kann zurückgebogen werden, um das Bilderzeugungselement in das Gehäuse einzulegen, ohne dass dabei eine Kraft durch den Bügel auf das Bilderzeugungselement ausgeübt wird. In anderen Worten, diese Ausführungsform ermöglicht eine kraftfreie Montage des Bilderzeugungselementes. Anders als bei bekannten Vorrichtungen, bei denen das Bilderzeugungselement unter Kraftaufwand in das Gehäuse gepresst wird, wird das Bilderzeugungselement in dieser Ausführungsform bei der Montage nicht mechanisch belastet. Insbesondere bei aus Glas gefertigten Bilderzeugungselementen reduziert dies den Ausschuss durch Bruch.

Bei einer weiteren Ausführungsform umfasst das Gehäuse mindestens eine in die vordefinierte Richtung vorgespannte erste elastische Rippe als das zweite elastische Positionierungselement. Die erste elastische Rippe ist insbesondere derart ausgebildet, im montierten Zustand eine Haltekraft auf die Abbildungsoptik auszuüben, wenn die Abbildungsoptik in das Gehäuse eingesetzt ist. Durch die Haltekraft wird ein Kraftschluss und/oder Formschluss zwischen dem Gehäuse und der Abbildungsoptik realisiert. Vorzugsweise ist die erste elastische Rippe derart ausgebildet, dass sich ein Abstand zwischen der elastischen Rippe und dem zweiten Anschlagelement in Richtung der Endlage der Abbildungsoptik im montierten Zustand verringert. Dies erleichtert das Einsetzen der Abbildungsoptik in das Gehäuse und verhindert, dass die Linse gegen den Fuß der ersten elastischen Rippe drückt und somit ein Federn der ersten elastischen Rippe verhindern würde oder die Endlage nicht sicher erreicht würde.

Bei einer weiteren Ausführungsform umfasst das Gehäuse mindestens zwei zweite Anschlagelemente. Die Abbildungsoptik weist zwei Kanten auf. Das zweite elastische Positionierungselement ist dazu ausgebildet, die Abbildungsoptik derart gegen die zweiten Anschlagelemente zu pressen, dass eine erste Kante der zwei Kanten der Abbildungsoptik gegen ein erstes der zweiten Anschlagelemente gepresst wird und dass eine zweite Kante der zwei Kanten der Abbildungsoptik gegen ein zweites der zweiten Anschlagelemente gepresst wird. Durch diese Anordnung wird die durch das zweite elastische Positionierungselement auf die Abbildungsoptik ausgeübte Anpresskraft auf die beiden zweiten Anschlagelemente verteilt. Hierdurch kann die Positionierung der Abbildungsoptik noch genauer erfolgen. Vorzugsweise sind die beiden Kanten rechtwinklig zueinander. Die beiden Kanten können aber auch in jedem anderen Winkel zueinanderstehen, insbesondere Winkel kleiner als 180°. Die beiden Kanten können insbesondere auch Teil ein und derselben durchgehenden Rundung der Abbildungsoptik sein. Besonders vorteilhaft ist es, wenn die Abbildungsoptik diagonal gegen das Gehäuse gepresst wird. Darunter wird verstanden, dass die vordefinierte Richtung eine Winkelhalbierende der beiden Kanten ist. Beispielsweise schließen die vordefinierte Richtung und die Kanten von der Montagerichtung her gesehen, d.h. beispielsweise von oben, bei jeweils einen Winkel von 45° ein. Bei einer solchen Ausführungsform wird die Anpresskraft gleichmäßig auf die zweiten Anschlagelemente verteilt, wodurch die Positionierung noch genauer erfolgen kann.

Bei einer weiteren Ausführungsform ist das Gehäuse zweiteilig ausgeführt und umfasst ein erstes Gehäuseelement und ein zweites Gehäuseelement. Das erste Gehäuseelement wird in diesem Dokument auch als Tubus und das zweite Gehäuseelement als Tubusdeckel bezeichnet. Das erste Gehäuseelement umfasst vorzugsweise das erste Anschlagelement und das erste elastische Positionierungselement und ist dazu ausgebildet, zumindest das Bilderzeugungselement aufzunehmen. Das zweite Gehäuseelement umfasst vorzugsweise das zweite Anschlagelement und das zweite elastische Positionierungselement umfasst und ist dazu ausgebildet, zumindest die Abbildungsoptik aufzunehmen. Insbesondere sind die beiden Gehäuseelemente derart ausgeführt, dass diese im montierten Zustand einen Formschluss realisieren. Im montierten Zustand umfassen die beiden Gehäuseelemente zumindest das Bilderzeugungselement und die Abbildungsoptik vorzugsweise vollständig.

Bei einer weiteren Ausführungsform umfasst die Vorrichtung eine Kondensoroptik, die zwischen der Lichtquelle und dem Bilderzeugungselement angeordnet und dazu ausgebildet ist, zumindest einen Teil des Beleuchtungslichts auf das Bilderzeugungselement zu bündeln. Wenn das Gehäuse zweiteilig ausgeführt ist, ist die Kondensoroptik vorzugsweise in dem erstem Gehäuseelement aufgenommen. Die Kondensoroptik sorgt dafür, dass möglichst viel des Beleuchtungslichts auf das Bilderzeugungselement gelangt. Hierdurch wird die Lichtquelle optimal ausgenutzt.

Bei einer weiteren Ausführungsform weist das Gehäuse ein drittes Anschlagelement und ein drittes elastisches Positionierungselement auf, das dazu ausgebildet ist, eine Federkraft auf die Kondensoroptik auszuüben, um die Kondensoroptik in die vordefinierte Richtung gegen das dritte Anschlagelement zu pressen. Wenn das Gehäuse zweiteilig ausgeführt ist, sind das dritte Anschlagelement und das dritte elastische Positionierungselement vorzugsweise jeweils ein Teil des ersten Gehäuseelementes. Das dritte Anschlagelement und das dritte elastische Positionierungselement wirken zusammen, um die Kondensoroptik innerhalb des Gehäuses zu positionieren. Die Funktionsweise des dritten Anschlagelementes und des dritten elastischen Positionierungselementes entspricht der des zweiten Anschlagelementes und des zweiten elastischen Positionierungselementes in Bezug auf die Abbildungsoptik. Alle im Zusammenhang mit dem zweiten Anschlagelement und dem zweiten elastischen Positionierungselement genannten Vorteile gelten in gleichem Maße für das dritte Anschlagelement und das dritte elastische Positionierungselement. Insbesondere können das dritte Anschlagelement und das dritte elastische Positionierungselement in gleicher Weise weitergebildet werden, wie dies in diesem Dokument für das zweite Anschlagelement und das zweite elastische Positionierungselement beschrieben ist.

Bei einer weiteren Ausführungsform umfasst das Gehäuse mindestens eine in die vordefinierte Richtung vorgespannte zweite elastische Rippe als das dritte elastische Positionierungselement. Die zweite elastische Rippe positioniert die Kondensoroptik in ähnlicher Weise innerhalb des Gehäuses wie die erste elastische Rippe die Abbildungsoptik. Alle im Zusammenhang mit der ersten elastischen Rippe genannten Vorteile gelten in gleichem Maße für die zweite elastische Rippe. Insbesondere kann die zweite elastische Rippe in gleicher Weise weitergebildet werden, wie dies in diesem Dokument für die erste elastische Rippe beschrieben ist.

Bei einer weiteren Ausführungsform umfasst das Gehäuse mindestens zwei dritte Anschlagelemente. Die Kondensoroptik weist zwei Kanten auf. Das dritte elastische Positionierungselement ist dazu ausgebildet, die Kondensoroptik derart gegen die dritten Anschlagelemente zu pressen, dass eine erste Kante der zwei Kanten der Kondensoroptik gegen ein erstes der dritten Anschlagelemente gepresst wird und dass eine zweite Kante der zwei Kanten der Kondensoroptik gegen ein zweites der dritten Anschlagelemente gepresst wird. Diese Ausführungsform hat dieselben Vorteile hinsichtlich der Positionierung der Kondensoroptik wie die oben beschriebene Ausführungsform, bei der die Abbildungsoptik gegen die beiden zweiten Anschlagelemente gepresst wird. Insbesondere kann diese auf die Kondensoroptik bezogene Ausführungsform in der gleichen Weise weitergebildet werden, wie dies im Zusammenhang mit der auf die Abbildungsoptik bezogenen Ausführungsformen beschrieben ist.

Bei einer weiteren Ausführungsform umfassen die Abbildungsoptik und die Kondensoroptik jeweils mindestens ein Auflageelement, das in einem montierten Zustand der Vorrichtung auf dem Bilderzeugungselement aufliegt. Das Auflageelement der Abbildungsoptik und das Auflageelement der Kondensoroptik liegen sich in dem montierten Zustand der Vorrichtung an dem Bilderzeugungselement derart gegenüber, dass eine durch das Auflageelement der Abbildungsoptik auf das Bilderzeugungselement ausgeübte Kraft einer durch das Auflageelement der Kondensoroptik auf das Bilderzeugungselement ausgeübten Kraft entgegenwirkt. Da sich die entgegengesetzten Kräfte gegenseitig aufheben, wird durch die Auflageelemente keine Biegekraft auf das Bilderzeugungselement ausgeübt. Hierdurch wird das Bilderzeugungselement sicher und stabil innerhalb des Gehäuses gehalten, ohne dass dabei durch ein Biegemoment Spannungen in dem Bilderzeugungselement erzeugt können, welche das Bilderzeugungselement zerbrechen könnten. Vorzugsweise umfassen die Abbildungsoptik und die Kondensoroptik jeweils drei oder mehr Auflageelemente. Jeweils ein Auflageelement der Abbildungsoptik und ein Auflageelement der Kondensoroptik liegen sich dabei paarweise an dem Bilderzeugungselement gegenüber. Hierdurch werden zwei Dreipunktauflagen realisiert, welche das Bilderzeugungselement sicher und stabil innerhalb des Gehäuses halten.

Bei einer weiteren Ausführungsform umfasst das Bilderzeugungselement zwei Glasplatten und ein ansteuerbares Flüssigkristallelement, das zwischen den zwei Glasplatten angeordnet ist. Bei dieser Ausführungsform erfolgt eine Bilderzeugung durch das Durchleuchten des Flüssigkristallelementes. Durch Transparentschalten verschiedener Segmente des Flüssigkristallelementes können so verschiedene Bilder auf der Projektionsfläche erzeugt werden. Alternativ oder zusätzlich umfasst das Bilderzeugungselement eine Glasplatte und ein auf die Glasplatte aufgebrachtes Diapositiv. Beispielsweise umfasst die Glasplatte verschiedene Bilder als Diapositive, so dass durch Transparentschalten verschiedener Segmente des Flüssigkristallelementes jeweils eines oder mehrere der Bilder auf der Projektionsfläche erzeugt werden. Die vorgeschlagene Vorrichtung reduziert die Spannungen im Bilderzeugungselement welche bei herkömmlichen Vorrichtungen durch die Quetschrippen erzeugt werden. Dadurch ist die vorgeschlagene Vorrichtung besonders für die Verwendung von Bilderzeugungselementen aus Glas geeignet, die im Gegensatz zu Bilderzeugungselementen aus Kunststoffen bessere optische Eigenschaften aufweisen. Dadurch, dass das Bilderzeugungselement bei der vorgeschlagenen Vorrichtung nicht in das Gehäuse gepresst wird, können durch scharfe Kanten der Glasplatten, wie sie beim Ritzen und Brechen entstehen, kein Span abgeschält werden, der als Verunreinigung die Abbildung stören würde.

Die Erfindung betrifft ferner eine Baugruppe für ein Fahrzeug, insbesondere ein Kraftfahrzeug, mit einer Vorrichtung nach einem der vorhergehenden Ansprüche. Die Baugruppe ist insbesondere derart ausgebildet, dass sie in einer Tür des Fahrzeugs, einem Seitenspiegel, einem Seitenschweller des Fahrzeugs oder in einem Bauraum, der für eine Rückfahrkamera vorgesehen ist, angeordnet werden kann. Alternativ ist die Baugruppe derart ausgebildet, dass sie in einem Bauraum, der für eine Leuchte des Fahrzeugs vorgesehen ist, angeordnet werden kann. In dieser alternativen Ausführungsform ist die Vorrichtung insbesondere ausgebildet, wenigstens ein Bild auf die Projektionsfläche zu projizieren, das eine zulassungsfähige Signallichtfunktion darstellt oder Teil einer zulassungsfähigen Signallichtfunktion ist, beispielsweise ein Schlusslicht oder ein Fahrtrichtungsanzeiger. Die Verwendung der Baugruppe ist jedoch nicht auf den Außenbereich des Fahrzeugs beschränkt. Beispielsweise kann die Baugruppe auch als dynamische Lese- oder Raumbeleuchtung im Innenraum des Fahrzeugs angeordnet werden. Die Baugruppe hat dieselben Vorteile wie die oben beschriebene Vorrichtung und kann insbesondere mit den Merkmalen der auf die Vorrichtung gerichteten Abhängigen Ansprüche weitergebildet werden.

Die Abbildungsoptik und/oder die Kondensoroptik sind insbesondere aus einem Kunststoff gefertigt. Hierdurch sind die Abbildungsoptik und/oder die Kondensoroptik witterungsbeständig und somit für die Verwendung in dem Fahrzeug, insbesondere einem Außenbereich des Fahrzeugs besonders geeignet.

Weitere Merkmale und Vorteile ergeben sich aus der folgenden Beschreibung, die beispielhafte Ausführungsformen in Verbindung mit den beigefügten Figuren näher erläutert.

### Es zeigen:

- Figur 1: eine schematische Explosionsdarstellung einer Vorrichtung zum Erzeugen von Bildern auf einer Projektionsfläche gemäß einem Ausführungsbeispiel;
- Figur 2: eine schematische Darstellung eines ersten Gehäuseelementes der Vorrichtung gemäß Figur 1;
- Figur 3: eine weitere schematische Darstellung des ersten Gehäuseelementes gemäß Figur 2;
- Figur 4: eine weitere schematische Darstellung des ersten Gehäuseelementes gemäß den Figuren 2 und 3;
- Figur 5: eine schematische Schnittdarstellung des ersten Gehäuseelementes gemäß den Figuren 2 bis 4;
- Figur 6: eine schematische Darstellung eines zweiten Gehäuseelementes der Vorrichtung gemäß den Figuren 1 bis 5;
- Figur 7: eine weitere schematische Darstellung des zweiten Gehäuseelementes gemäß Figur 6;
- Figur 8: eine schematische Explosionsdarstellung einer Vorrichtung zum Erzeugen von Bildern auf einer Projektionsfläche gemäß dem Stand der Technik;
- Figur 9: eine schematische Darstellung eines ersten Gehäuseelementes der bekannten Vorrichtung gemäß Figur 8; und
- Figur 10: eine weitere schematische Darstellung des ersten Gehäuseelementes der bekannten Vorrichtung gemäß den Figuren 8 und 9.

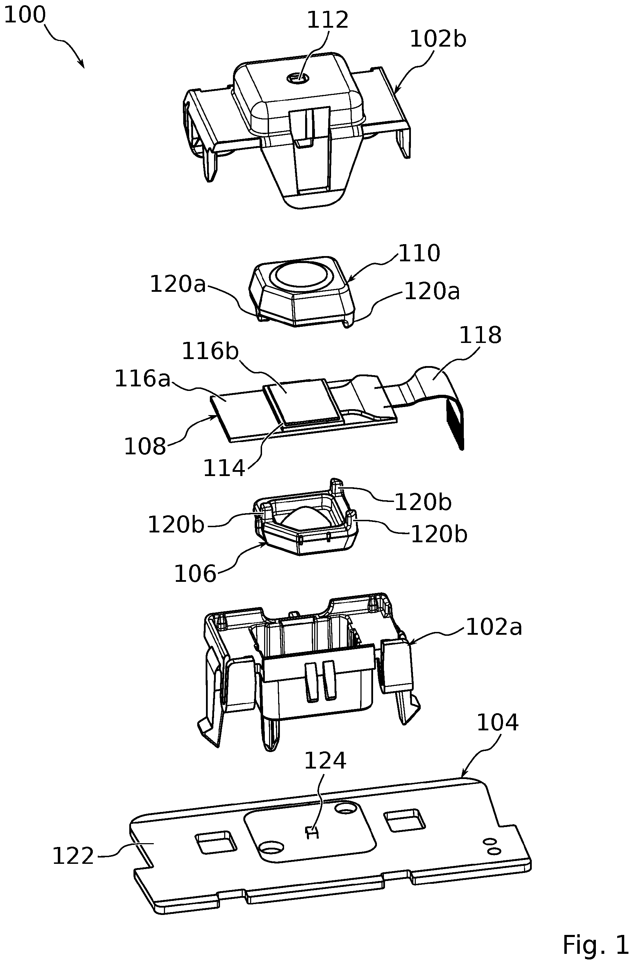

Figur 1 zeigt eine schematische Explosionsdarstellung einer Vorrichtung 100 zum Erzeugen von Bildern auf einer Projektionsfläche gemäß einem Ausführungsbeispiel.

Die Vorrichtung 100 umfasst ein Gehäuse 102a, 102b und eine Lichtquelle 104, die unterhalb des Gehäuses 102a, 102b angeordnet ist. Die Vorrichtung 100 umfasst ferner eine Kondensoroptik 106, ein Bilderzeugungselement 108 und eine Abbildungsoptik 110, die in dieser Reihenfolge übereinander gestapelt innerhalb des Gehäuses 102a, 102b angeordnet sind.

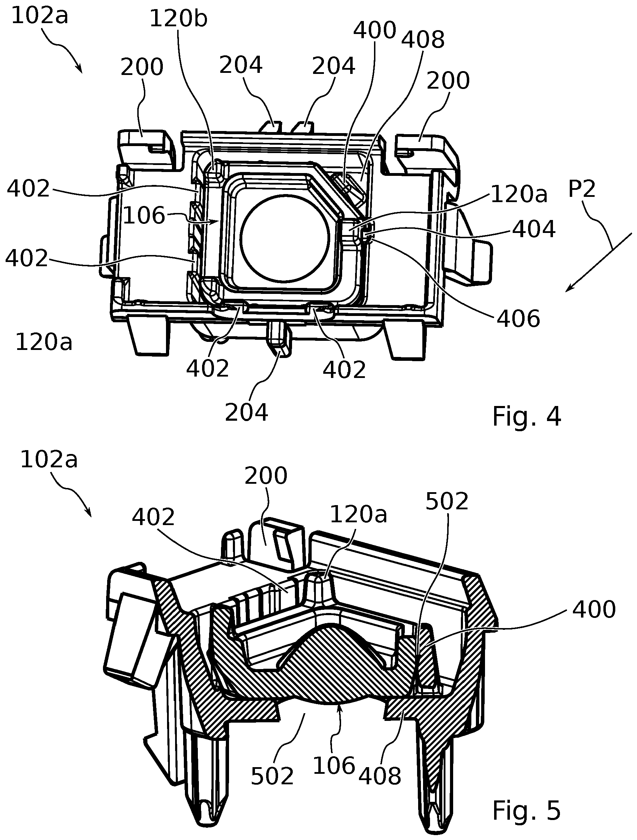

In der Ausführungsform nach Figur 1 ist das Gehäuse 102a, 102b rein beispielhaft als eine zweiteilige Baugruppe ausgeführt. Das Gehäuse 102a, 102b besteht aus einem ersten Gehäuseelement 102a und einem zweiten Gehäuseelement 102b und dient der Fixierung und der Justage der übrigen Elemente 106, 108, 110 der Vorrichtung 100. Das Gehäuse 102a, 102b ist lichtabsorbierend und schirmt somit Streulicht ab. Das erste Gehäuseelement 102a wird auch Tubus genannt und hat eine zur Lichtquelle 104 gerichtete Lichteintrittsöffnung 502 (vgl. Figur 5), durch die das Beleuchtungslicht in das Gehäuse 102a, 102b eintreten kann. Das zweite Gehäuseelement 102b wird auch Tubusdeckel genannt und hat eine Lichtaustrittsöffnung 112, durch welche das Beleuchtungslicht wieder aus dem Gehäuse 102a, 102b austreten kann.

Das in das Gehäuse 102a, 102b eintretende Beleuchtungslicht wird durch die Kondensoroptik 106 auf das Bilderzeugungselement 108 gebündelt. Das Bilderzeugungselement 108 wird hierdurch durchleuchtet. Die Abbildungsoptik 110 bildet dann das durchleuchtete Bilderzeugungselement 108 durch die Lichtaustrittsöffnung 112 hindurch auf die Projektionsfläche ab, um die Bilder auf der Projektionsfläche zu erzeugen. Die Funktionsweise der Vorrichtung 100 gleicht somit einem Dia- oder Filmprojektor, bei dem ein Diapositiv eines Bildes zum Erzeugen eines Bildes auf der Projektionsfläche durchleuchtet wird.

Das Bilderzeugungselement 108 umfasst rein beispielhaft ein Flüssigkristallelement 114, das zwischen zwei Glasplatten 116a, 116b angeordnet ist. Zumindest eine der Glasplatten 116a, 116b kann Diapositive und/oder Masken der Bilder umfassen, die von der Vorrichtung 100 auf der Projektionsfläche erzeugt werden. Alternativ kann auch das Flüssigkristallelement 114 selbst derart ausgestaltet sein, das beim Durchleuchten des Flüssigkristallelementes 114 die Bilder auf der Projektionsfläche erzeugt werden. Beispielsweise kann ein Elektrodenpaar des Flüssigkristallelementes 114 entsprechend der darzustellenden Geometrie ausgeformt sein. Das Bilderzeugungselement 108 umfasst ferner ein Kabel 118, das an einem Ende mit dem Flüssigkristallelement 114 verbunden ist und dessen anderes Ende mit einer Steuereinheit oder einem Bus-System verbindbar ist. Das Flüssigkristallelement 114 umfasst mehrere Segmente und kann über das Kabel 118 angesteuert werden, um einzelne Segmente transparent oder intransparent zu schalten. Jedem der Segmente ist zumindest ein Bild zugeordnet, die durch die Vorrichtung 100 auf der Projektionsfläche erzeugt werden können. Durch Transparentschalten unterschiedlicher Segmente können somit unterschiedliche Bilder auf der Projektionsfläche erzeugt werden.

Die Abbildungsoptik 110 und die Kondensoroptik 106 weisen jeweils drei Auflageelemente 120a, 120b auf. Die Auflageelemente 120a, 120b liegen im montierten Zustand der Vorrichtung 100 auf dem Bilderzeugungselement 108 auf. Die Auflageelemente 120a, 120b sind ferner derart angeordnet, dass sich jeweils eines der Auflageelemente 120a der Abbildungsoptik 110 und eines der Auflageelemente 120b der Kondensoroptik 106 an dem Bilderzeugungselement 108 gegenüberliegen. Hierdurch wird der Kraft, die eines der Auflageelemente 120a der Abbildungsoptik 110 auf das Bilderzeugungselement 108 ausübt, durch die Kraft entgegengewirkt, die eines der Auflageelemente 120b der Kondensoroptik 106 auf das Bilderzeugungselement 108 ausübt, und umgekehrt. Dies verhindert, dass insbesondere die Glasplatten des Bilderzeugungselementes 108 ein Biegemoment erfahren und brechen.

Die Lichtquelle 104 umfasst rein beispielhaft einen Schaltungsträger 122 auf dem ein LED-Element 124 angeordnet ist, welches das Beleuchtungslicht emittiert. Der Schaltungsträger 122 kann weitere Elemente aufweisen, beispielsweise Kühlkörper zum Kühlen des LED-Elementes 124.

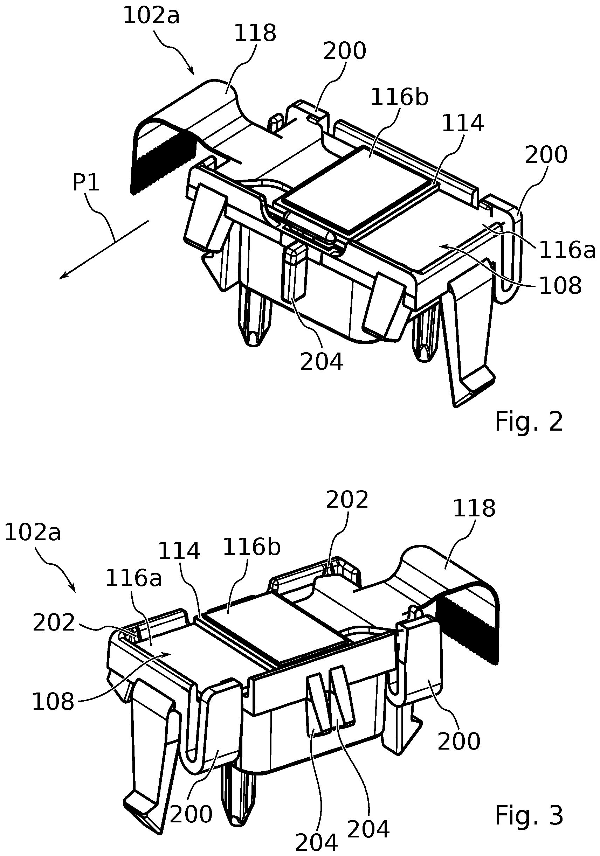

Die Figuren 2 und 3 zeigen jeweils eine schematische Darstellung des ersten Gehäuseelementes 102a der Vorrichtung 100 gemäß Figur 1.

Das erste Gehäuseelement 102a umfasst das Bilderzeugungselement 108 und die Kondensoroptik 106, die unterhalb des Bilderzeugungselementes 108 angeordnet ist. Das erste Gehäuseelement 102a umfasst ferner zwei erste elastische Positionierungselemente 200 und zwei erste Anschlagelemente 202. Die ersten elastischen Positionierungselemente 200 üben eine Federkraft entlang einer vorbestimmten Richtung P1 auf das Bilderzeugungselement 108 aus und drücken es dadurch gegen die ersten Anschlagelemente 202.

Die ersten elastischen Positionierungselemente 200 sind rein beispielhaft als U-förmige Bügel ausgebildet, die in Richtung der vorbestimmten Richtung P1 vorgespannt sind. Die Bügel können entgegen der vorbestimmten Richtung P1 von den ersten Anschlagelementen 202 weggebogen werden. Wenn die ersten elastischen Positionierungselemente 200 entgegen der vorbestimmten Richtung P1 gebogen sind, kann das Bilderzeugungselement 108 in das erste Gehäuseelement 102a eingelegt werden, ohne dass dabei einer Kraft überwunden werden muss, beispielsweise durch Pressen des Bilderzeugungselementes 108 in das Gehäuse 102a, 102b. Hierdurch wird verhindert, dass das Bilderzeugungselement 108 bei der Montage der Vorrichtung 100 bricht und Ausschuss erzeugt wird.

Die ersten Anschlagelemente 202 sind nicht-elastisch und als ein integraler Bestandteil des ersten Gehäuseelementes 102a ausgebildet. Die ersten Anschlagelemente 202 verformen sich daher nicht, wenn das Bilderzeugungselement 108 durch die ersten elastischen Positionierungselemente 200 gegen die ersten Anschlagelemente 202 gedrückt wird. Die Position der ersten Anschlagelemente 202 bestimmt somit wesentlich die Position des Bilderzeugungselementes 108 innerhalb des Gehäuses 102a, 102b.

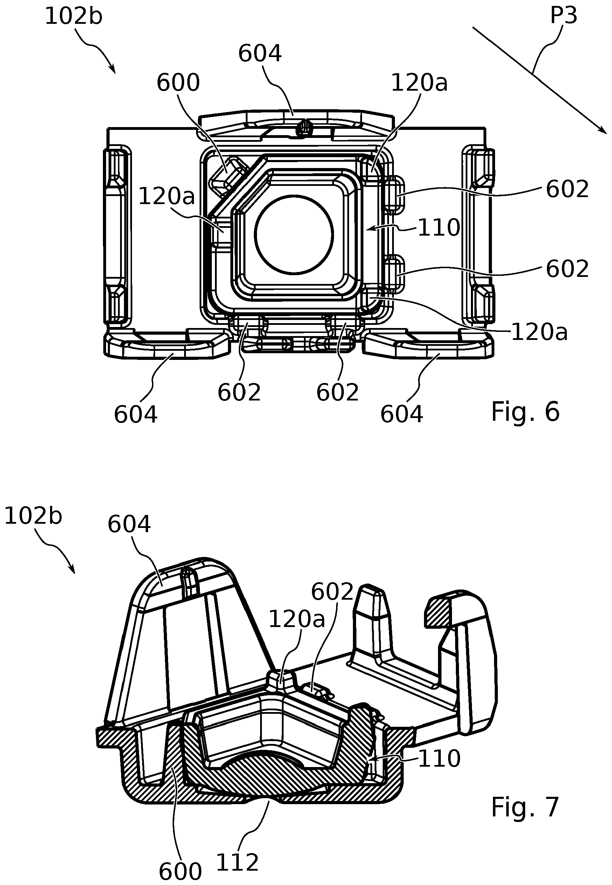

Das erste Gehäuseelement 102a weist ferner Erhebungen 204 auf, die seitlich an dem ersten Gehäuseelement 102a angeordnet sind. Die Erhebungen 204 können mit Laschen 604 und einem Führungselement 606 des zweiten Gehäuseelementes 102b (vgl. Figur 6) in Eingriff gebracht werden, um einen Formschluss zwischen dem ersten Gehäuseelement 102a und dem zweiten Gehäuseelement 102b zu realisieren.

In den Darstellungen der Figuren 2 und 3 verdeckt das Bilderzeugungselement 108 jeweils die Kondensoroptik 106. Die von dem Bilderzeugungselement 108 verdeckten Elemente des ersten Gehäuseelementes 102a sind anhand der Figuren 4 und 5 im Folgenden näher beschrieben.

Figur 4 zeigt eine weitere schematische Darstellung des ersten Gehäuseelementes 102a gemäß den Figuren 2 und 3.

Gegenüber den Darstellungen in den Figuren 2 und 3 ist bei der Darstellung in der Figur 4 das Bilderzeugungselement 108 weggelassen, so dass die darunterliegenden Elemente zu sehen sind. Wie der Figur 4 zu entnehmen ist, umfasst das erste Gehäuseelement 102a ein weiteres elastisches Positionierungselement 400, das im Folgenden als drittes elastisches Positionierungselement 400 bezeichnet wird. Das dritte elastische Positionierungselement 400 übt eine Federkraft auf die Kondensoroptik 106 aus und drückt die Kondensoroptik 106 dadurch entlang einer vorbestimmten Richtung P2 gegen insgesamt vier Anschlagelemente 402, die im Folgenden als dritte Anschlagelemente 402 bezeichnet werden. Jeweils zwei der dritten Anschlagelemente 402 stoßen dabei an jeweils eine Kante der Kondensoroptik 106.

Die Kondensoroptik 106 hat von oben gesehen den Querschnitt eines Quadrats mit abgerundeten Ecken, wobei eine der Ecken fehlt und durch eine diagonale Kante ersetzt ist. An dieser diagonalen Kante drückt das dritte elastische Positionierungselement 400 gegen die Kondensoroptik 106. Die Kondensoroptik 106 weist zudem eine Erhebung 404 auf, die im montierten Zustand in einer Aussparung 406 des ersten Gehäuseelementes 102a liegt. Die Erhebung 404 erleichtert die Montage der Kondensoroptik 106, da diese im Sinne eines Schlüssel-Schloss-Prinzips oder Poka-Yoka-Prinzips verhindert, dass die Kondensoroptik 106 falsch in die Vorrichtung 100 eingebaut wird.

Die beiden Kanten der Kondensoroptik 106, die an die dritten Anschlagelemente 402 stoßen, sind rein beispielhaft rechtwinklig zueinander und die vorbestimmte Richtung P2 verläuft derart, dass die vorbestimmte Richtung P2 eine Winkelhalbierende der beiden Kanten darstellt. Hierdurch wird die durch das dritte elastische Positionierungselement 400 ausgeübte Federkraft gleichmäßig auf die dritten Anschlagelemente 402 verteilt. Eine Komponente der durch das dritte elastische Positionierungselement 400 ausgeübten Federkraft verläuft entlang der gleichen Richtung, wie die vorbestimmte Richtung P1 in die das Bilderzeugungselement 108 durch die ersten elastischen Positionierungselemente 200 gedrückt wird. Das Bilderzeugungselement 108 und die Kondensoroptik 106 werden hierdurch in die gleiche Richtung positioniert und zueinander angeordnet.

Rein beispielhaft ist das dritte elastische Positionierungselement 400 als eine elastische Rippe ausgebildet, die sich von einem Boden 408 des ersten Gehäuseelementes 102a weg erstreckt. Wie in der Figur 4 zu sehen ist, ist das dritte elastische Positionierungselement 400 leicht in Richtung der vorbestimmten Richtung P2 geneigt. Das dritte elastische Positionierungselement 400 ist im Folgenden unter Bezugnahme auf Figur 5 noch näher beschrieben.

Figur 5 zeigt eine weitere schematische Schnittdarstellung des ersten Gehäuseelementes 102a gemäß den Figuren 2 bis 4.

Wie in der Figur 5 zu sehen ist, weist das dritte elastische Positionierungselement 400 eine der Abbildungsoptik 110 zugewandte Aussparung 502 auf. Diese Aussparung 500 vereinfacht die Positionierung der Kondensoroptik 106 innerhalb des ersten Gehäuseelementes 102a bei der Montage und sorgt dafür, dass die durch das dritte elastische Positionierungselement 400 ausgeübte Federkraft immer an einer definierten Stelle ausgeübt wird. Im montierten Zustand ist durch das dritte elastische Positionierungselement 400 ein Kraftschluss und/oder Formschluss zwischen dem ersten Gehäuseelement 102a und der Kondensoroptik 106 realisiert.

In Figur 5 ist ferner die Lichteintrittsöffnung 502 zu sehen, durch die das Beleuchtungslicht in das Gehäuse 102a, 102b eintreten kann. Durch das dritte elastische Positionierungselement 400 wird die Kondensoroptik 106 zentriert über der Lichteintrittsöffnung 502 positioniert.

Die Figuren 6 und 7 zeigen jeweils eine schematische Darstellung des zweiten Gehäuseelementes 102b der Vorrichtung 100 gemäß den Figuren 1 bis 5.

Das zweite Gehäuseelement 102b umfasst die Abbildungsoptik 110, ein elastisches Positionierungselement 600, das im Folgenden als zweites elastisches Positionierungselement 600 bezeichnet wird, und vier Anschlagelemente 602, die im Folgenden als zweite Anschlagelemente 602 bezeichnet werden. Das zweite elastische Positionierungselement 600 übt eine Federkraft auf die Abbildungsoptik 110 aus und drückt dadurch die Abbildungsoptik 110 entlang einer vorbestimmten Richtung P3 gegen die zweiten Anschlagelemente 602. Die vorbestimmte Richtung P3, in welche die Abbildungsoptik 110 durch das zweite elastische Positionierungselement 600 gedrückt wird, ist dabei identisch mit der vorbestimmten Richtung P2, in welche die Kondensoroptik 106 durch das dritte elastische Positionierungselement 400 gedrückt wird. Die Abbildungsoptik 110 und die Kondensoroptik 106 werden hierdurch in die gleiche Richtung positioniert und zueinander angeordnet.

Wie die Kondensoroptik 106, hat die Abbildungsoptik 110 von oben gesehen den Querschnitt eines Quadrats mit abgerundeten Ecken, wobei auch der Abbildungsoptik 110 eine der Ecken fehlt und durch eine diagonale Kante ersetzt ist. An dieser diagonalen Kante drückt das zweite elastische Positionierungselement 600 gegen die Abbildungsoptik 110. Der Querschnitt der Abbildungsoptik 110 und der Kondensoroptik 106 sind zueinander gespiegelt. Dies erleichtert die Montage der Abbildungsoptik 110 und der Kondensoroptik 106, da dies im Sinne eines Schlüssel-Schloss-Prinzips oder Poka-Yoka-Prinzips verhindert, dass die Abbildungsoptik 110 bzw. die Kondensoroptik 106 in das falsche Gehäuseelement 102a, 102b eingesetzt werden.

Die beiden Kanten der Abbildungsoptik 110, die an die zweiten Anschlagelemente 602 stoßen, sind, rein beispielhaft wie die Kanten der Kondensoroptik 106 ebenfalls rechtwinklig zueinander und die vorbestimmte Richtung P3 verläuft derart, dass die vorbestimmte Richtung P3 eine Winkelhalbierende der beiden Kanten darstellt. Dies hat die im Zusammenhang mit der Kondensoroptik 106 beschriebenen Vorteile. Eine Komponente der durch das zweite elastische Positionierungselement 600 ausgeübten Federkraft verläuft entlang der gleichen Richtung, wie die vorbestimmte Richtung P1 in die das Bilderzeugungselement 108 durch die ersten elastischen Positionierungselemente 200 gedrückt wird. Das Bilderzeugungselement 108 und die Abbildungsoptik 110 werden hierdurch in die gleiche Richtung P3 positioniert und zueinander angeordnet. Durch das zweite elastische Positionierungselement 600 wird die Abbildungsoptik zudem zentriert über der Lichtaustrittsöffnung 112 positioniert, wie in Figur 7 zu sehen ist. Im montierten Zustand ist durch das zweite elastische Positionierungselement 600 ein Kraftschluss und/oder Formschluss zwischen dem zweiten Gehäuseelement 102b und der Abbildungsoptik 110 realisiert.

Das zweite Gehäuseelement 102b weist die Laschen 604 auf, die seitlich an dem zweiten Gehäuseelement 102b angeordnet sind. Die Laschen 604 können mit den Erhebungen 204 des ersten Gehäuseelementes 102a (vgl. Figuren 2 und 3) in Eingriff gebracht werden, um den Formschluss zwischen dem ersten Gehäuseelement 102a und dem zweiten Gehäuseelement 102b zu realisieren. Das Führungselement 606 des zweiten Gehäuseelementes 102b wirkt dabei mit einer der Erhebungen 204 des ersten Gehäuseelementes 102a zusammen, um die beiden Gehäuseelemente 102a, 102b beim Zusammenführen zueinander zu positionieren.

Bei dem anhand der Figuren 1 bis 7 beschriebenen Ausführungsbeispiel bilden zumindest die Lichtquelle 104, das Bilderzeugungselement 108 und die Abbildungsoptik 110 die Vorrichtung 100 zum Erzeugen von Bildern auf einer Projektionsfläche. Weitere in den Figuren 1 bis 7 gezeigte und in der vorangegangenen Beschreibung genannte Elemente und Merkmale können Teil der beanspruchten Vorrichtung 100 sein.

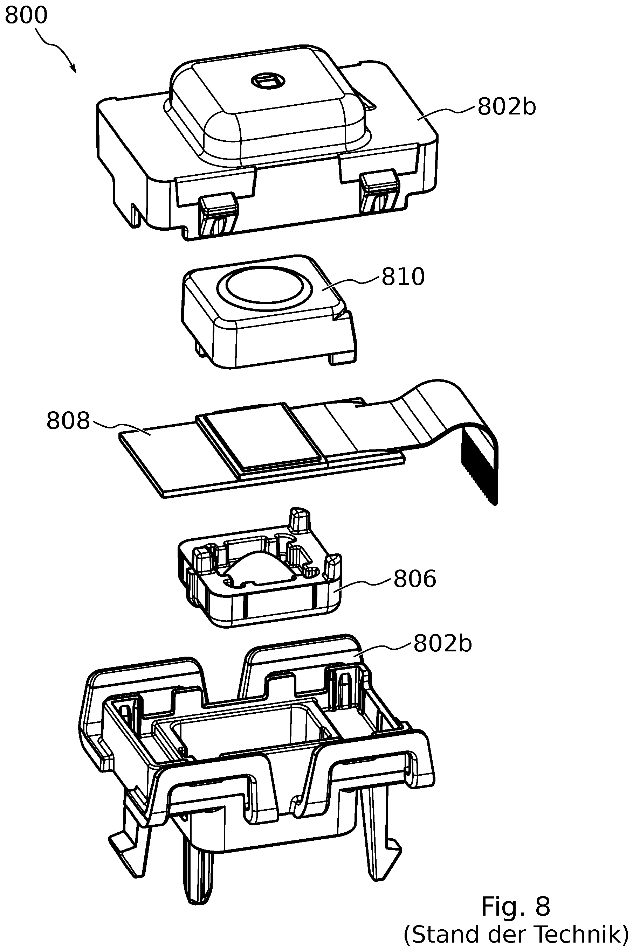

Im Folgenden ist anhand der Figur 8 bis 10 eine Vorrichtung 800 zum Erzeugen von Bildern auf einer Projektionsfläche gemäß dem Stand der Technik beschrieben. Die folgende Beschreibung soll die Nachteile der bekannten Vorrichtung 800 illustrieren.

Figur 8 zeigt eine schematische Explosionsdarstellung der Vorrichtung 800 zum Erzeugen von Bildern auf einer Projektionsfläche gemäß dem Stand der Technik.

Die Vorrichtung 800 umfasst ein Gehäuse 802a, 802b. Die Vorrichtung 800 umfasst ferner eine Kondensoroptik 806, ein Bilderzeugungselement 808 und eine Abbildungsoptik 810, die in dieser Reihenfolge übereinander gestapelt innerhalb des Gehäuses 802a, 802b angeordnet sind. Das Gehäuse 802a, 802b besteht aus einem ersten Gehäuseelement 802a und einem zweiten Gehäuseelement 802b und dient der Fixierung und der Justage der übrigen Einheiten der Vorrichtung 800. Eine Lichtquelle zum Erzeugen von Beleuchtungslicht kann unter dem Gehäuse 802a, 802b angeordnet sein.

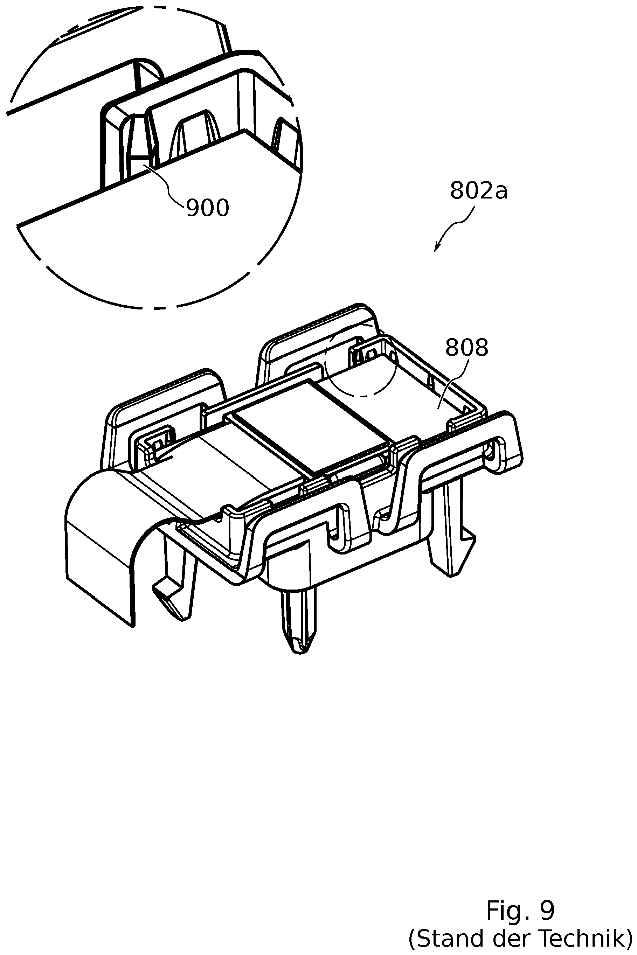

Figur 9 zeigt eine schematische Darstellung des ersten Gehäuseelementes 802a der bekannten Vorrichtung 800 gemäß Figur 8.

Das erste Gehäuseelement 802a weist Quetschrippen 900 zum Positionieren des Bilderzeugungselementes 808 auf. Wie in der Detailansicht in der Figur 9 zu sehen ist, haben die Quetschrippen 900 einen dreieckigen Querschnitt und sind integraler Bestandteil des Gehäuseelementes 802a. Entsprechend sind die Quetschrippen 900 wenig flexibel. Es ist daher möglich, dass durch Produktionsfehler ein Spalt zwischen den Quetschrippen 900 und dem Bilderzeugungselement 808 entsteht. Das Bilderzeugungselement 808 sitzt in diesem Fall nicht fest in dem Gehäuse 802a, 802b und klappert. Andererseits kann es auch der Fall sein, dass die Quetschrippen 900 eine zu große Kraft auf das Bilderzeugungselement 808 ausüben, wenn dieses in das erste Gehäuseelement 802a gepresst wird. Hierdurch können Spannungen in dem Bilderzeugungselement 808 entstehen, die das Bilderzeugungselement 808 zerbrechen können. Ferner können scharfe Kanten, wie sie beim Ritzen und Brechen von Glasplatten entstehen, beim Einpressen Späne von den Quetschrippen 900 abschälen und so die Vorrichtung 800 verunreinigen oder einen Spalt zwischen den Quetschrippen 900 und dem Bilderzeugungselement 808 erzeugen.

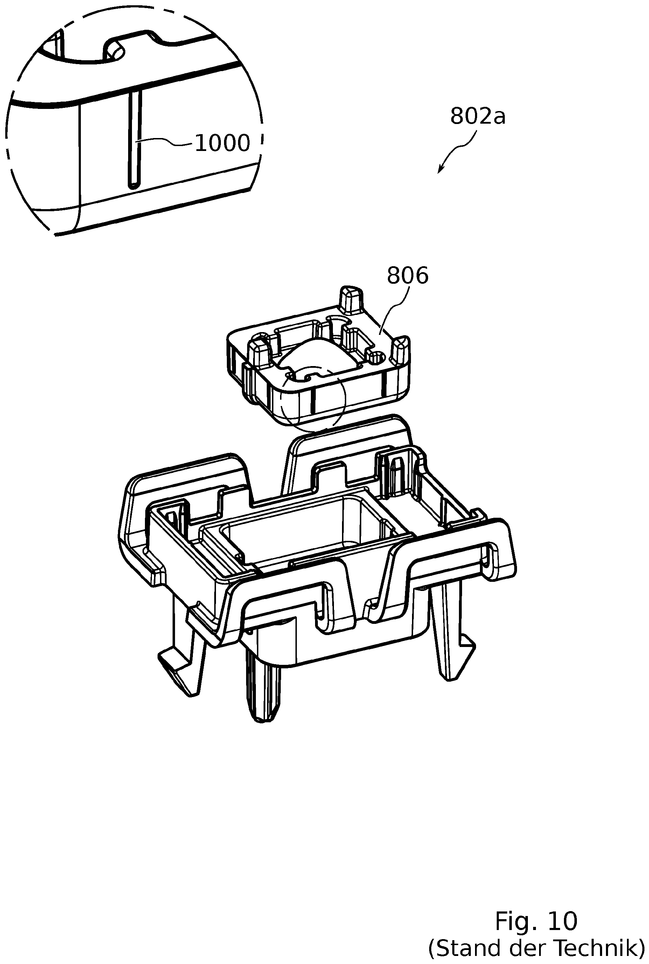

Figur 10 zeigt eine weitere schematische Darstellung des ersten Gehäuseelementes 802a der bekannten Vorrichtung 800 gemäß den Figuren 8 und 9.

Gegenüber der Darstellung in der Figur 9 ist bei der Darstellung in der Figur 10 das Bilderzeugungselement 808 weggelassen, so dass die darunterliegenden Elemente zu sehen sind. Wie der Figur 10 zu entnehmen ist, umfasst die Kondensoroptik 806 ebenfalls Quetschrippen 1000. Diese pressen gegen das erste Gehäuseelement 802a, um die Kondensoroptik 806 innerhalb des Gehäuses 802a, 802b zu positionieren. Wie in der Detailansicht in der Figur 10 zu sehen ist, haben die Quetschrippen 1000 einen gerundeten Querschnitt und sind integraler Bestandteil der Kondensoroptik 806. Auch die Quetschrippen 1000 der Kondensoroptik 806 können Spiel haben, d.h. die Kondensoroptik 806 ist nicht fest in dem ersten Gehäuseelement 802a angeordnet und klappert. Die Quetschrippen 1000 können aber auch zu stramm sein, sodass sich die Kondensoroptik 806 bei der Montage nicht oder nur mit großer Mühe in die vorgesehene Endlage innerhalb des ersten Gehäuseelementes 802a bringen lässt. Wenn die Kondensoroptik 806 nicht korrekt in der vorgesehenen Endlage angeordnet ist, können Probleme beim Zusammenführen der beiden Gehäuseelemente 802a, 802b auftreten. Unter Umständen können durch die nicht korrekt angeordnete Kondensoroptik 806 beim Zusammenführen große Kräfte auf das Bilderzeugungselement 808 ausgeübt werden, die zum Glasbruch führen.

### Bezugszeichenliste

- 100: Vorrichtung
- 102a, 102b: Gehäuse
- 104: Lichtquelle
- 106: Kondensoroptik
- 108: Bilderzeugungselement
- 110: Abbildungsoptik
- 112: Lichtaustrittsöffnung
- 114: Flüssigkristallelement
- 116a, 116b: Glasplatte
- 118: Kabel
- 120a, 120b: Auflageelemente
- 122: Schaltungsträger
- 124: LED-Element
- 200: Positionierungselement
- 202: Anschlagelement
- 204: Erhebung
- 400: Positionierungselement
- 402: Anschlagelement
- 404: Erhebung
- 406: Aussparung
- 408: Boden
- 500: Aussparung
- 502: Lichteintrittsöffnung
- 600: Positionierungselement
- 602: Anschlagelement
- 604: Lasche
- 606: Führungselement
- 800: Vorrichtung
- 802a, 802b: Gehäuse
- 806: Kondensoroptik

## Patentansprüche

1. Vorrichtung (100) zum Erzeugen von Bildern auf einer Projektionsfläche, umfassend:
mindestens eine Lichtquelle (104), die dazu ausgebildet ist, Beleuchtungslicht zu erzeugen;
ein Bilderzeugungselement (108), das zum Erzeugen der Bilder von dem Beleuchtungslicht durchleuchtbar ist;
eine Abbildungsoptik (110), die dazu ausgebildet ist, das Bilderzeugungselement (108) zum Erzeugen der Bilder auf die Projektionsfläche abzubilden; und
ein Gehäuse (102a, 102b), das dazu ausgebildet ist, zumindest das Bilderzeugungselement (108) und die Abbildungsoptik (110) aufzunehmen,
wobei das Gehäuse (102a, 102b) ein erstes Anschlagelement (202) und ein erstes elastisches Positionierungselement (200) aufweist, das dazu ausgebildet ist, eine Federkraft auf das Bilderzeugungselement (108) auszuüben, um das Bilderzeugungselement (108) in eine vordefinierte Richtung (P1) gegen das erste Anschlagelement (202) zu pressen; und/oder
wobei das Gehäuse (102a, 102b) ein zweites Anschlagelement (602) und ein zweites elastisches Positionierungselement (600) aufweist, das dazu ausgebildet ist, eine Federkraft auf die Abbildungsoptik (110) auszuüben, um die Abbildungsoptik (110) in die vordefinierte Richtung (P3) gegen das zweite Anschlagelement (602) zu pressen.

2. Vorrichtung (100) nach Anspruch 1, wobei das Gehäuse (102a, 102b) mindestens einen in die vordefinierte Richtung (P1) vorgespannten Bügel als das erste elastische Positionierungselement (200) umfasst.

3. Vorrichtung (100) nach Anspruch 2, wobei der Bügel entgegen der vordefinierten Richtung (P1) biegbar ist, so dass das Bilderzeugungselement (108) in das Gehäuse (102a, 102b) einsetzbar ist, ohne dass dabei eine Kraft durch den Bügel auf das Bilderzeugungselement (108) ausgeübt wird.

4. Vorrichtung (100) nach einem der vorhergehenden Ansprüche, wobei das Gehäuse (102a, 102b) mindestens eine in die vordefinierte Richtung (P3) vorgespannte erste elastische Rippe als das zweite elastische Positionierungselement (600) umfasst.

5. Vorrichtung (100) nach einem der vorhergehenden Ansprüche, wobei das Gehäuse (102a, 102b) mindestens zwei zweite Anschlagelemente (602) umfasst; wobei die Abbildungsoptik (110) zwei Kanten aufweist; und wobei das zweite elastische Positionierungselement (600) dazu ausgebildet ist, die Abbildungsoptik (110) derart gegen die zweiten Anschlagelemente (602) zu pressen, dass eine erste Kante der zwei Kanten der Abbildungsoptik (110) gegen ein erstes der zweiten Anschlagelemente (602) gepresst wird und dass eine zweite Kante der zwei Kanten der Abbildungsoptik (110) gegen ein zweites der zweiten Anschlagelemente (602) gepresst wird.

6. Vorrichtung (100) nach einem der vorhergehenden Ansprüche, wobei das Gehäuse (102a, 102b) zweiteilig ausgeführt ist und ein erstes Gehäuseelement (102a) und ein zweites Gehäuseelement (102b) umfasst.

7. Vorrichtung (100) nach Anspruch 6, wobei das erste Gehäuseelement (102a) das erste Anschlagelement (202) und das erste elastische Positionierungselement (204) umfasst und dazu ausgebildet ist, zumindest das Bilderzeugungselement (108) aufzunehmen.

8. Vorrichtung (100) nach Anspruch 6 oder 7, wobei das zweite Gehäuseelement (102b) das zweite Anschlagelement (602) und das zweite elastische Positionierungselement (600) umfasst und dazu ausgebildet ist, zumindest die Abbildungsoptik (110) aufzunehmen.

9. Vorrichtung (100) nach einem der vorhergehenden Ansprüche, umfassend eine Kondensoroptik (106), die zwischen der Lichtquelle (104) und dem Bilderzeugungselement (108) angeordnet und dazu ausgebildet ist, zumindest einen Teil des Beleuchtungslichts auf das Bilderzeugungselement (108) zu bündeln.

10. Vorrichtung (100) nach Anspruch 9, wobei das Gehäuse (102a, 102b) ein drittes Anschlagelement (402) und ein drittes elastisches Positionierungselement (400) aufweist, das dazu ausgebildet ist, eine Federkraft auf die Kondensoroptik (106) auszuüben, um die Kondensoroptik (106) in die vordefinierte Richtung (P2) gegen das dritte Anschlagelement (402) zu pressen.

11. Vorrichtung (100) nach Anspruch 10, wobei das Gehäuse (102a, 102b) mindestens eine in die vordefinierte Richtung (P2) vorgespannte zweite elastische Rippe als das dritte elastische Positionierungselement (400) umfasst.

12. Vorrichtung (100) nach einem der Ansprüche 9 bis 11, wobei das Gehäuse (102a, 102b) mindestens zwei dritte Anschlagelemente (402) umfasst; wobei die Kondensoroptik (106) zwei Kanten aufweist; und wobei das dritte elastische Positionierungselement (400) dazu ausgebildet ist, die Kondensoroptik (106) derart gegen die dritten Anschlagelemente (402) zu pressen, dass eine erste Kante der zwei Kanten der Kondensoroptik (106) gegen ein erstes der dritten Anschlagelemente (402) gepresst wird und dass eine zweite Kante der zwei Kanten der Kondensoroptik (106) gegen ein zweites der dritten Anschlagelemente (402) gepresst wird.

13. Vorrichtung (100) nach einem der Ansprüche 9 bis 12, wobei die Abbildungsoptik (110) und die Kondensoroptik (106) jeweils mindestens ein Auflageelement (120a, 120b) umfassen, das in einem montierten Zustand der Vorrichtung (100) auf dem Bilderzeugungselement (108) aufliegt; und wobei sich das Auflageelement (120a) der Abbildungsoptik (110) und das Auflageelement (120b) der Kondensoroptik (106) in dem montierten Zustand der Vorrichtung (100) an dem Bilderzeugungselement (108) gegenüberliegen, so dass eine durch das Auflageelement (120a) der Abbildungsoptik (110) auf das Bilderzeugungselement (108) ausgeübte Kraft einer durch das Auflageelement (120b) der Kondensoroptik (106) auf das Bilderzeugungselement (108) ausgeübten Kraft entgegenwirkt.

14. Vorrichtung (100) nach einem der vorhergehenden Ansprüche, wobei das Bilderzeugungselement (108) zwei Glasplatten (116a, 116b) und ein ansteuerbares Flüssigkristallelement (114) umfasst, das zwischen den zwei Glasplatten (116a, 116b) angeordnet ist; und/oder wobei das Bilderzeugungselement (108) eine Glasplatte (116a, 116b) und ein auf die Glasplatte (116a, 116b) aufgebrachtes Diapositiv umfasst.

15. Baugruppe für ein Fahrzeug, insbesondere ein Kraftfahrzeug, mit einer Vorrichtung (100) nach einem der vorhergehenden Ansprüche.
